(19) Europäisches Patentamt
European Patent Office
Office européen des brevets

(11) **EP 3 865 859 A1**

(12) **EUROPÄISCHE PATENTANMELDUNG**

(43) Veröffentlichungstag:
**18.08.2021 Patentblatt 2021/33**

(51) Int Cl.:
*G01N 21/37* (2006.01)   *G01N 21/61* (2006.01)

(21) Anmeldenummer: **20156957.1**

(22) Anmeldetag: **12.02.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Kirsammer, Florian**
**76131 Karlsruhe (DE)**
• **Dittes, Walter**
**75053 Gondelsheim (DE)**
• **Schnabel, Andreas**
**76761 Rülzheim (DE)**
• **Frank, Alexander**
**76456 Kuppenheim (DE)**

(54) **NICHTDISPERSIVER INFRAROT-GASANALYSATOR UND VERFAHREN ZUR GASANALYSE**

(57)     Ein nichtdispersiver Infrarot-Gasanalysator (1) enthält ein optopneumatisches Detektorsystem (10), das zur Detektion einer modulierten und ein Messgas (7) durchstrahlenden Infrarot-Strahlung (3) gasgefüllte und über eine Leitung (13) mit einem darin angeordneten druck- oder strömungsempfindlichen Sensor (15) verbundene Detektorkammern (11, 12) aufweist und ein Messsignal (14) erzeugt. Benachbart zu dem Detektorsystem (10) ist ein mit diesem weitgehend baugleiches gasgefülltes Kompensationssystem (16) angeordnet, das einen weiteren druck- oder strömungsempfindlichen Sensor (21) enthält und ein zur Kompensation pneumatischer Störeffekte dienendes Kompensationssignal (29) erzeugt. Eine Auswerteeinrichtung (22), erzeugt ein Messergebnis (23) aus der Differenz zwischen dem Messsignal (14) und dem Kompensationssignal (20).

Erfindungsgemäß enthält die Auswerteeinrichtung (22) eine Lock-in-Demodulationseinrichtung, die das Messsignal (14) und das Kompensationssignal (20) bei der Modulationsfrequenz der Infrarot-Strahlung (3) demoduliert. Die Auswerteeinrichtung (22) erzeugt einen Nutzsignalanteil des Messsignals (14) als Differenz zwischen dem demodulierten Messsignal (14) und dem mit mindestens einem Korrelationsfaktor multiplizierten demodulierten Kompensationssignal (20) und wertet den Nutzsignalanteil zu dem Messergebnis (23) aus.

FIG. 1

EP 3 865 859 A1

**EP 3 865 859 A1**

**Beschreibung**

Die Erfindung betrifft einen nichtdispersiven Infrarot-Gasanalysator

- mit einem optopneumatischen Detektorsystem, das zur Detektion einer modulierten und ein Messgas durchstrahlenden Infrarot-Strahlung gasgefüllte und über eine Leitung mit einem darin angeordneten druck- oder strömungsempfindlichen Sensor verbundene Detektorkammern aufweist und ein Messsignal erzeugt,
- mit einem parallel und benachbart zu dem Detektorsystem angeordneten, weitgehend baugleichen und gleich ausgerichteten, aber gegenüber, aber gegenüber der Infrarot-Strahlung unempfindlichen gasgefüllten Kompensationssystem, das einen weiteren druck- oder strömungsempfindlichen Sensor enthält und ein zur Kompensation pneumatischer Störeffekte dienendes Kompensationssignal erzeugt, und
- mit einer Auswerteeinrichtung, die ein Messergebnis aus der Differenz zwischen dem Messsignal und dem Kompensationssignal erzeugt.

Ein derartiger NDIR-Gasanalysator ist aus der DE 27 02 978 A1 bekannt und dient zur Kompensation von Störungen des Ausgangssignals des Detektorsystems, also des Messsignals, aufgrund von pneumatischen Störeffekten in dem gasgefüllten Detektorsystem, die infolge der Trägheit des Gases bei Erschütterungen und/oder Beschleunigungen auftreten. Die Kammern des Detektorsystems weisen für die Infrarot-Strahlung durchlässige Fenster auf und sind mit einer zu bestimmenden Gaskomponente des Messgases oder einem geeigneten Ersatzgas gefüllt. Demgegenüber ist das Kompensationssystem strahlungsundurchlässig abgeschlossen oder kann ein Gas enthalten, das im Infrarot-Bereich transparent ist, also kein Infrarot absorbiert.

Da das Detektorsystem und das Kompensationssystem zwangsläufig voneinander beabstandet sind und bei Schwingungen oder Vibrationen neben translatorischen auch rotatorische Bewegungen auftreten können, kann es zu Phasenunterschieden zwischen den Ausgangssignalen des Detektorsystems und des Kompensationssystems kommen, so dass eine einfache Subtraktion des Ausgangssignals des Kompensationssystems von dem des Detektorsystems zu keinem befriedigenden Ergebnis führt und der Messfehler durch die angestrebte Kompensation sogar noch erhöht wird. Dies gilt auch bei toleranzbedingten baulichen Unterschieden zwischen dem Detektorsystem und dem Kompensationssystems und der elektrischen Verschaltung ihrer Sensoren.

Aus der DE 10 2012 212 978 B3 ist ein Zweistrahl-NDIR-Gasanalysator bekannt, bei dem die modulierte Infrarot-Strahlung auf einen Messstrahlengang durch das Messgas und einen Vergleichsstrahlengang durch ein Referenzgas auf das optopneumatische Detektorsystem geführt ist. Das aufgrund der Differenz der Absorptionen in dem Messgas und dem Referenzgas gebildete Messsignal enthält neben der Modulationsfrequenz f auch einen aus der Summe der Absorptionen in den beiden Gasen bestehenden Störsignalanteil mit der zweifachen Modulationsfrequenz 2f. Das Messsignal wird in einem Zweiphasen-Lock-in-Demodulator (z. B. EP 2 130 295 B1) bei der Modulationsfrequenz f phasensensitiv detektiert, um die Inphasenkomponente und Quadraturkomponente zu ermitteln und diese in weiteren Signalverarbeitungsschritten zu dem Messergebnis zu verarbeiten. Zusätzlich erfolgt eine phasensensitive Demodulation bei der doppelten Modulationsfrequenz 2f, um aus der dabei erhaltenen Inphasenkomponente und Quadraturkomponente einen Diagnosewert zu ermitteln. Aus der EP 3 276 308 A1 ist es bekannt, mit Hilfe eines solchen Diagnosewertes das Messergebnis zu normieren.

Der Erfindung liegt die Aufgabe zugrunde, die Störempfindlichkeit eines nichtdispersiven Infrarot-Gasanalysators gegenüber Vibrationen und Erschütterungen, wie sie z. B. bei Marineanwendungen oder in Turbinenhäusern auftreten können, zu verringern.

Gemäß der Erfindung wird die Aufgabe durch den in Anspruch 1 angegebenen Gasanalysator gelöst, von dem vorteilhafte Weiterbildungen in den Unteransprüchen angegeben sind.

Gegenstand der Erfindung ist somit ein nichtdispersiver Infrarot-Gasanalysator

- mit einem optopneumatischen Detektorsystem, das zur Detektion einer modulierten und ein Messgas durchstrahlenden Infrarot-Strahlung gasgefüllte und über eine Leitung mit einem darin angeordneten druck- oder strömungsempfindlichen Sensor verbundene Detektorkammern aufweist und ein Messsignal erzeugt,
- mit einem parallel und benachbart zu dem Detektorsystem angeordneten und mit diesem weitgehend baugleichen, aber gegenüber der Infrarot-Strahlung unempfindlichen gasgefüllten Kompensationssystem, das einen weiteren druck- oder strömungsempfindlichen Sensor enthält und ein zur Kompensation pneumatischer Störeffekte dienendes Kompensationssignal erzeugt, und
- mit einer Auswerteeinrichtung, die ein Messergebnis aus der Differenz zwischen dem Messsignal und dem Kompensationssignal erzeugt,
dadurch gekennzeichnet, dass die Auswerteeinrichtung
- eine Lock-in-Demodulationseinrichtung enthält, die das Messsignal und das Kompensationssignal bei der Modulationsfrequenz der Infrarot-Strahlung demoduliert, und

- dazu ausgebildet ist, das einen von pneumatischen Störeffekten freien Nutzsignalanteil des Messsignals als Differenz zwischen dem demodulierten Messsignal und dem mit mindestens einem Korrelationsfaktor multiplizierten demodulierten Kompensationssignal zu erzeugen und den Nutzsignalanteil zu dem Messergebnis auszuwerten.

Gegenstand der Erfindung ist ferner ein Verfahren zur Gasanalyse unter Verwendung eines solchen nichtdispersiven Infrarot-Gasanalysators.

Gemäß der Erfindung wird die Kompensation pneumatischer Störeffekte also nicht bei dem Messsignal, sondern bei seinem durch die Demodulation bei der Modulationsfrequenz f der Infrarot-Strahlung erhaltenen Nutzsignalanteil (1f-Signalanteil) vorgenommen, indem das bei derselben Frequenz demodulierte Kompensationssignal mit einem Korrelationsfaktor gewichtet und dann von dem demodulierten Messsignal subtrahiert wird, bevor dieses zu dem Messergebnis ausgewertet wird. Der Korrelationsfaktor stellt ein Maß für die Ähnlichkeit des demodulierten Messsignals und des demodulierten Kompensationssignals dar und entspricht einem Skalierungsfaktor für das demodulierte Kompensationssignals, mit dem u. a. toleranzbedingte bauliche Unterschiede zwischen dem Detektorsystem und dem Kompensationssystems und der elektrischen Verschaltung ihrer Sensoren sowie Unterschiede der analogen Signalverarbeitung ausgeglichen werden.

Der Korrelationsfaktor kann im Rahmen einer Kalibrierung bei abgeschalteter Infrarot-Strahlungsquelle ermittelt werden, indem der Gasanalysator gezielt mit Schwingungen oder Vibrationen angeregt wird und dabei der Korrelationsfaktor so hoch gewählt wird, dass die Amplituden des demodulierten Messsignals und die des mit dem Korrelationsfaktor multiplizierten demodulierten Kompensationssignals gleich sind. Um mögliche Offseteinflüsse auszuschalten, wird das Kompensationssignal vorzugsweise DC bereinigt, bevor es mit dem Korrelationsfaktor multipliziert wird. Der Korrelationsfaktor entspricht somit dem Verhältnis des demodulierten Messsignals zu dem DCbereinigten demodulierten Kompensationssignal.

Im Falle einer Zweiphasen-Lock-in-Demodulation werden vorzugsweise zwei Korrelationsfaktoren, nämlich einer für die Inphasenkomponente und der andere für die Quadraturkomponente ermittelt und später im Messbetrieb für die Korrektur des demodulierten Messsignals verwendet.

Wie bereits erwähnt, kann das Messignal in an sich bekannter Weise nicht nur bei der einfachen Modulationsfrequenz der Infrarot-Strahlung, sondern auch bei der doppelten Modulationsfrequenz phasensensitiv demoduliert werden, um einen auf der Summe der Absorptionen der Infrarot-Strahlung in dem Messgas und dem Vergleichsgas beruhenden Störsignalanteil (2f-Signalanteil) des Messignals zu erhalten und daraus einen Diagnosewert zu ermitteln oder damit das Messergebnis zu normieren. In diesem Fall wird vorzugsweise auch das Kompensationssignal bei der doppelten Modulationsfrequenz demoduliert, um damit den Störsignalanteil bzw. 2f-Signalanteil des Messignals von pneumatischen Störeffekten zu befreien. Die entsprechenden Korrelationsfaktoren können auf dieselbe Weise, insbesondere auch bei Zweiphasen-Lock-in-Demodulation jeweils für die Inphasenkomponente und Quadraturkomponente, ermittelt werden, so wie dies für die Korrektur des 1f-Signalanteils des Messignals vorgesehen ist.

Die Bestimmung eines oder mehrerer fester Korrelationsfaktoren im Rahmen einer Kalibration durch äußere mechanische Anregung des Gasanalysators eignet sich für die Kompensation von mehr oder weniger definierten oder bekannten Schwingungen bzw. Vibrationen, die zum Zeitpunkt der Ermittlung des Korrelationsfaktors bzw. der Korrelationsfaktoren und im späteren Messbetrieb gleich sind. In vielen Fällen kann jedoch eine dynamische Anpassung der Korrelationsfaktoren an sich ändernde Verhältnisse erforderlich sein. Beispiele hierfür sind sich überlagernde Schwingungen aus unterschiedlichen Richtungen oder Torsionsschwingungen, die zu unterschiedlichen Phasenversätzen zwischen dem Messsignal und dem Kompensationssignal führen können, oder Temperatur- und Frequenzabhängigkeiten der Kompensationsfaktoren.

In diesen Fällen kann der mindestens eine Korrelationsfaktor in vorteilhafter Weise online, d. h. während des Messbetriebs durch statistische Auswertung des demodulierten Messsignals und des demodulierten Kompensationssignals ermittelt werden. Die statistische Auswertung kann auf Basis der Kovarianz des demodulierten Messsignals und des demodulierten Kompensationssignals in einer Stichprobe erfolgen, die sich laufend ändert und zu jedem aktuellen Zeitpunkt eine vorgegebene Anzahl von zuletzt erhaltenen Werten des demodulierten Messsignals und des demodulierten Kompensationssignals umfasst. Unter dem demodulierten Mess- und Kompensationssignal sind hier entweder ihre 1f-Signalanteile oder die 2f-Signalanteile zu verstehen, je nachdem, ob der Korrelationsfaktor für die Beseitigung von pneumatischen Störeffekten in dem Nutzsignalanteil oder in dem Störsignalanteil des Messignals verwendet wird. Außerdem sind im Falle der Zweiphasen-Lock-in-Demodulation unter dem demodulierten Mess- und Kompensationssignal ihre jeweiligen Inphasen- und Quadraturkomponenten zu verstehen.

Aufgrund ihrer laufenden Ermittlung im Messbetrieb des Gasanalysators passen sich die Korrelationsfaktoren selbstständig unterschiedlichen bzw. sich ändernden Umgebungsbedingungen, wie z. B. Umgebungstemperatur oder Lage des Gasanalysators, und unterschiedlichen bzw. sich ändernden Erschütterungs- und Vibrationseinflüssen an, denen der Gasanalysator ausgesetzt ist. Außerdem ergeben sich Kosten- und Zeitersparnisse bei der Produktion und beim Service, weil die Korrelationsfaktoren nicht außerhalb des Messbetriebs, z. B. in der Produktion oder nach einem Austausch der Detektorsystems im Rahmen einer aufwendigen Kalibration mit äußerer mechanische Anregung des Gasanalysators bestimmt werden müssen.

Im Weiteren wird die Erfindung anhand von Ausführungsbeispielen und unter Bezugnahme auf die Figuren der Zeichnung erläutert; im Einzelnen zeigen:

Fig. 1 ein Beispiel für den erfindungsgemäßen NDIR-Gasanalysator mit einem optopneumatischen Detektorsystem, einem baugleichen gasgefüllten Kompensationssystem und einer nachgeordneten Auswerteeinrichtung,

Fig. 2 eine alternative Ausführung des Detektorsystems,

Fig. 3 ein Blockschaltbild der Auswerteeinrichtung und

Fig. 4 ein grobes Ablaufdiagramm für die Ermittlung der Korrelationsfaktoren mittels statistischer Auswertung des demodulierten Messsignals und des Kompensationssignals.

Gleiche Bezugszeichen haben in den verschiedenen Figuren die gleiche Bedeutung. Die Darstellungen sind rein schematisch und repräsentieren keine Größenverhältnisse.

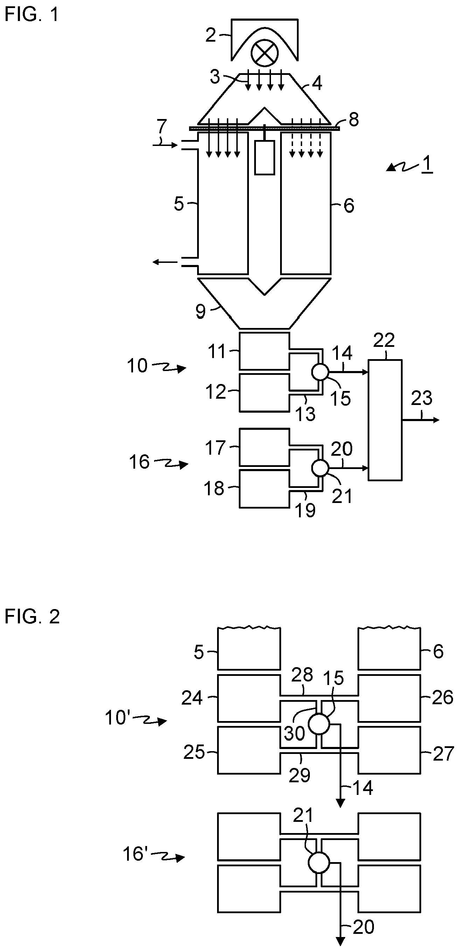

Fig. 1 zeigt einen NDIR-Gasanalysator 1, hier z. B. in Zweistrahl-Ausführung, bei dem die von einer Infrarot-Strahlungsquelle 2 erzeugte Infrarot-Strahlung 3 mittels eines Strahlteilers 4 auf einen Messstrahlengang durch eine Messküvette 5 und einen Vergleichsstrahlengang durch eine Referenzküvette 6 aufgeteilt wird. Die Messküvette 5 wird von einem Messgas 7 mit einer Messgaskomponente durchströmt, deren Konzentration zu bestimmen ist. Die Referenzküvette 6 ist mit einem Referenzgas, z. B. Stickstoff, gefüllt. Mittels einer zwischen dem Strahlteiler 4 und den Küvetten 5, 6 angeordneten Modulationseinrichtung 8, hier z. B. in Form eines rotierenden Blenden- oder Flügelrads, wird die Strahlung 3 abwechselnd durch die Messküvette 5 und Referenzküvette 6 freigegeben und gesperrt, so dass beide Küvetten abwechselnd durchstrahlt und abgeschattet werden. Die abwechselnd aus der Messküvette 5 und der Referenzküvette 6 austretende Strahlung wird mittels eines Strahlungssammlers 9 in ein optopneumatisches Detektorsystem 10 geleitet, das in bekannter Weise aus zwei hintereinander liegenden strahlungsdurchlässigen und mit der zu messenden Gaskomponente gefüllten Kammern 11, 12 besteht (Zweischichtdetektor), die über eine Leitung 13 mit einem darin angeordneten und ein Messsignal 14 erzeugenden druck- oder strömungsempfindlichen Sensor 15, z. B. einem Mikroströmungsfühler, verbunden sind. Bei einer alternativen Ausführung können die Detektorkammer 11 hinter der Messküvette 5 und die Kammer 12 hinter der Referenzküvette 6 angeordnet sein (Zweikammer-Einschichtdetektor), wobei der Strahlungssammler 9 entfällt. Das aufgrund der Differenz der Absorptionen in der Messküvette 5 und Referenzküvette 6 gebildete Messsignal 14 weist eine Modulationsfrequenz f auf. Zusätzlich enthält das Messsignal 14 einen aus der Summe der Absorptionen in den Küvetten 5, 6 bestehenden Störsignalanteil mit der zweifachen Modulationsfrequenz 2f.

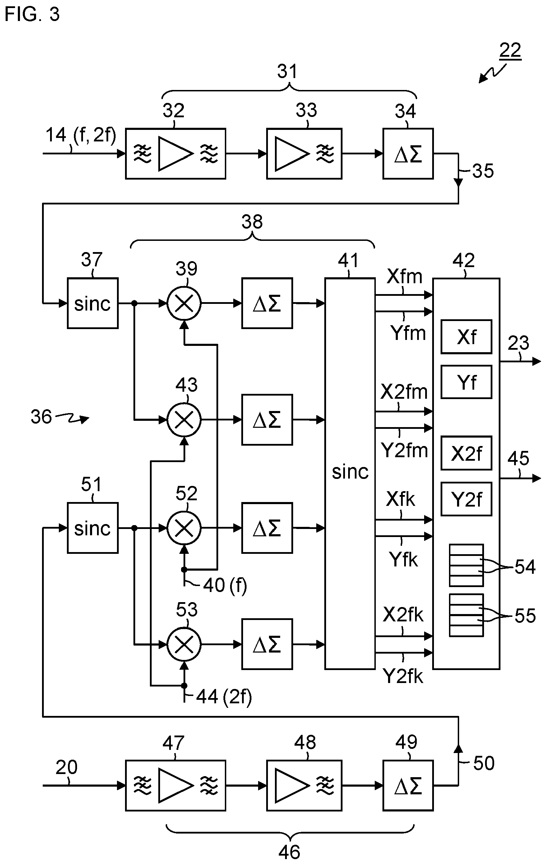

Der NDIR-Gasanalysator 1 weist weiterhin ein in unmittelbarer Nähe zu dem optopneumatischen Detektorsystem 10 und mit gleicher Ausrichtung angeordnetes weitgehend baugleiches Kompensationssystem 16 auf. Dieses besteht daher ebenfalls aus zwei hintereinander liegenden gasgefüllten Kammern 17, 18, die über eine Leitung 19 mit einem darin angeordneten und ein Kompensationssignal 20 erzeugenden druck- bzw. strömungsempfindlichen Sensor 21 verbunden sind. Die gasgefüllten Kammern 17, 18 und die sie verbindende Leitung 19 entsprechen in der Geometrie des inneren gasgefüllten Volumens möglichst genau dem das Messsignal 14 erzeugenden Detektorsystem 10, um gleiche pneumatische Verhältnisse zu erreichen. Im Unterschied zu dem Detektorsystem 10 sind die Kammern 17, 18 des Kompensationssystems 16 strahlungsundurchlässig und/oder ihre Gasfüllung Infrarot-transparent, so dass das erzeugte Kompensationssignal 20 von dem zu analysierenden Messgas 7 unbeeinflusst, im Übrigen aber in demselben Maß durch äußere Einflüsse wie Erschütterungen oder Lageänderungen beeinflusst ist, wie das Messsignal 14. Das Messsignal 14 und das Kompensationssignal 20 werden in einer Auswerteeinrichtung 22 zu einem Messergebnis 23, hier der Konzentration der interessierenden Messgaskomponente, verarbeitet, wobei, wie weiter unten anhand von Fig. 3 näher erläutert wird, mit Hilfe des Kompensationssignals 20 die Störbeeinflussung des Messergebnisses 23 durch die genannten äußeren Einflüsse reduziert wird.

Fig. 2 zeigt beispielhaft ein Detektorsystem 10' mit zwei im Messstrahlengang nach der Messküvette 5 hintereinander angeordneten Kammern 24, 25 und zwei im Vergleichsstrahlengang nach der Referenzküvette 6 hintereinander angeordneten Kammern 26, 27. Die Kammern 24 und 26 sind über eine Leitung 28 und die Kammern 25 und 27 über eine weitere Leitung 29 miteinander verbunden. Der druck- oder strömungsempfindlichen Sensor 15 ist in einer zwischen den beiden Leitungen 28, 29 liegenden Querverbindung 30 angeordnet. Auch hier ist das Kompensationssystem 16' weitgehend baugleich mit dem Detektorsystem 10'.

NDIR-Gasanalysatoren in Einstrahl-Ausführung, d. h. ohne Vergleichsküvette, sind ebenfalls bekannt und kommen, mit entsprechenden Abwandlungen, grundsätzlich auch für die Erschütterungskompensation in Betracht.

Zur gleichzeitigen Bestimmung von zwei oder mehreren unterschiedlichen Messgaskomponenten können NDIR-Gasanalysatoren neben dem gezeigten Detektorsystem 10, 10' weitere Detektorsysteme aufweisen, die mit den jeweils zu messenden Messgaskomponenten oder geeigneten Ersatzgasen gefüllt sind und im Infrarot- Strahlengang hintereinander angeordnet sind. Soweit die einzelnen Detektorsysteme baugleich sind und gemeinsam hinter der Messküvette 5 liegen, kann ein einzelnes Kompensationssystem ausreichend sein. Die Messküvette 5 kann aber auch in bekannter Weise aus hintereinander liegenden Teilküvetten bestehen, zwischen denen jeweils ein Detektorsystem angeordnet ist. In diesem Fall kann für jedes Detektorsystem ein eigenes räumlich benachbartes Kompensationssystem vorgesehen werden.

Fig. 3 zeigt beispielhaft ein Blockschaltbild der Auswerteeinrichtung 22. Das Messsignal 14 des Detektorsystems 10 (oder 10') mit dem Nutzsignalanteil der Frequenz f und dem Störsignalanteil der Frequenz 2f wird in einer Signalvorverarbeitungseinrichtung 31 in mehreren Stufen 32, 33, 34 gefiltert, verstärkt und durch Delta-Sigma-Modulation bei Überabtastung in ein bitserielles Digitalsignal (Bitstream) 35 umgesetzt. Im Weiteren wird das Digitalsignal 35 in einer digitalen Signalverarbeitungseinrichtung 36 mittels einer Signalverarbeitungssoftware zu dem Messwert 23 verarbeitet. Dazu wird das bitserielle Digitalsignal 35 zunächst in einem Sinc-Filter 37 tiefpassgefiltert und in der Abtastrate dezimiert. Anschließend wird das tiefpassgefilterte Digitalsignal 35 in einer Zweiphasen-Lock-in-Demodulationseinrichtung 38 durch Multiplikation 39 mit einem Referenzsignal 40 und dem um 90° phasenverschobenen Referenzsignal 40 (Sinus-Cosinus-Multiplikation) bei der Frequenz f des Nutzsignalanteils phasensensitiv detektiert, um durch anschließende Tiefpassfilterung 41 eine Inphasenkomponente Xfm und Quadraturkomponente Yfm des Nutzsignalanteils zu ermitteln und in einer Recheneinheit 42 zu dem Messergebnis 23 zu verarbeiten.

Bei alternativer Einphasen-Lock-in-Demodulation würde nur die Inphasenkomponente Xfm ermittelt werden.

Der in dem tiefpassgefilterten und in der Abtastrate dezimierten Digitalsignal 35 enthaltene Störsignalanteil kann in der Lock-in-Demodulationseinrichtung 38 durch eine weitere Sinus-Cosinus-Multiplikation 43 mit einem weiteren Referenzsignal 44 bei der Frequenz 2f des Störsignalanteils phasensensitiv detektiert werden. Durch die anschließende Tiefpassfilterung 41 werden die Inphasenkomponente X2fm und Quadraturkomponente Y2fm des Störsignalanteils ermittelt und in der Recheneinheit 42 zu einem Störsignalwert 45 verarbeitet. Abgesehen von der anderen Multiplikation durchläuft die Verarbeitung des Störsignalanteils des Messsignals 14 dieselben Schritte wie die des Nutzsignalanteils, wobei die Signalverarbeitung nach den Multiplikationen 39 und 43 parallel oder im Zeitmultiplex erfolgen kann. Der Störsignalwert 45 kann, wie aus der eingangs erwähnten DE 10 2012 212 978 B3 bzw. EP 3 276 308 A1 bekannt, zu Diagnosezwecken und/oder zur Normierung des Messergebnisses 23 verwendet werden.

Das Kompensationssignal 20 des Kompensationssystems 16 (oder 16') wird in der gleichen Weise wie das Messsignal 14 in einer Signalvorverarbeitungseinrichtung 46 in mehreren Stufen 47, 48, 49 gefiltert, verstärkt und durch Delta-Sigma-Modulation bei Überabtastung in ein bitserielles Digitalsignal 50 umgesetzt. Dieses wird wiederum in gleicher Weise wie das aus dem Messsignal 14 erzeugte Digitalsignal 35 zunächst in einem Sinc-Filter 51 tiefpassgefiltert und anschließend in der Lock-in-Demodulationseinrichtung 38 durch Sinus-Cosinus-Multiplikation 52 mit dem Referenzsignal 40 und Sinus-Cosinus-Multiplikation 53 mit dem weiteren Referenzsignal 44 bei den Frequenzen f bzw. 2f phasensensitiv detektiert, um durch die anschließende Tiefpassfilterung 41 die Inphasenkomponenten Xfk und X2fk sowie die Quadraturkomponenten Yfk und Y2fk zu ermitteln.

Um im Messbetrieb des Gasanalysators 1 von Erschütterungen oder Vibrationen hervorgerufene Störungen des Messsignals 14 zu kompensieren, wird das demodulierte Kompensationssignal mit einem Korrelationsfaktor Kxxf multipliziert und von dem demodulierten Messsignal subtrahiert. Der Korrelationsfaktor Kxxf stellt Maß für die Ähnlichkeit des bei der Modulationsfrequenz f demodulierten Messsignals 14 und des bei derselben Frequenz f demodulierten Kompensationssignals 20 dar und kann, wie weiter unten näher erläutert wird, einmalig außerhalb des Messbetriebs des Gasanalysators 1 oder laufend im Messbetrieb ermittelt werden.

Wie bereits erwähnt, besteht der mittels Einphasen-Lock-in-Demodulation bei der Frequenz f erhaltene Nutzsignalanteil (1f-Signalanteil) des Messsignals 14 aus der Inphasenkomponente Xfm und das entsprechend demodulierte Kompensationssignal 20 aus der Inphasenkomponente Xfk. In diesem Fall wird der im Messbetrieb des Gasanalysators 1 erhaltene Nutzsignalanteil Xfm des Messsignals 14 wie folgt korrigiert:

$$Xf = Xfm - Kxxf * Xfk ,$$

wobei Xf den korrigierten Nutzsignalanteil Xfm des Messsignals 14 bezeichnet.

Um einen möglichen DC-Offset in der Inphasenkomponente Xfk des demodulierten Kompensationssignals 20 zu eliminieren, kann von dem Signal Xfk dessen Mittelwert mw_Xfk subtrahiert werden, bevor es mit dem Korrelationsfaktor Kxxf multipliziert wird. Der korrigierte Nutzsignalanteil Xfm des Messsignals 14 ergibt sich dann wie folgt:

$$Xf = Xfm - Kxxf * (Xfk - mw\_Xfk) .$$

Bei der in Fig. 3 beispielhaft gezeigte Auswerteeinrichtung 22 mit einer Zweiphasen-Lock-in-Demodulationseinrichtung 38 werden zusätzlich die Quadraturkomponenten Yfm und Yfk des demodulierten Messsignals 14 und Kompensationssignals 20 berücksichtigt:

$$Xf = Xfm - Kxxf * Xfk$$

$$Yf = Yfm - Kyyf * Yfk .$$

Dabei sind Xf die Inphasenkomponente und Yf die Quadraturkomponente des korrigierten Nutzsignalanteils (1f-Signalanteils) des Messsignals 14. Der Korrelationsfaktor Kyyf zwischen den Quadraturkomponenten Yfm, Yfk des demodulierten Mess- und Kompensationssignals 14, 20 kann ggf. zur Vereinfachung als gleich groß wie der Korrelationsfaktor Kxxf für die Inphasenkomponenten Xfm, Xfk angenommen werden, d. h. Kyyf = Kxxf.

Auch hier können zur Beseitigung eines möglichen DC-Offsets in den Signalen Xfk und Yfk von diesen ihre Mittelwerte mw_Xfk bzw. mw_Yfk subtrahiert werden, bevor sie mit dem jeweiligen Korrelationsfaktor Kxxf bzw. Kyyf multipliziert werden:

$$Xf = Xfm - Kxxf * (Xfk - mw\_Xfk)$$

$$Yf = Yfm - Kyyf * (Yfk - mw\_Yfk) .$$

Zum Ausgleich der Phasenlage und damit zur Erhöhung der Kompensationsgüte können außer dem Korrelationsfaktor Kxxf zwischen den Inphasenkomponenten Xfm, Xfk und dem Korrelationsfaktor Kyyf zwischen den Quadraturkomponenten Yfm, Yfk auch noch Korrelationsfaktoren Kxyf, Kyxf zwischen den Inphasenkomponenten Xfm, Xfk und den Quadraturkomponenten Yfm, Yfk berücksichtigt werden, so dass man mit der Vereinfachung Kxyf = Kyxf die Inphasenkomponente Xf und die Quadraturkomponente Yf des korrigierten demodulierten Messsignals 14 wie folgt erhält:

$$Xf = Xfm - Kxxf * Xfk - Kxyf * Yfk$$

$$Yf = Yfm - Kyyf * Yfk + Kxyf * Xfk .$$

Auch hier können die Inphasenkomponente Xfk und die Quadraturkomponente Yfk des demodulierten Kompensationssignals 20 erforderlichenfalls von ihren jeweiligen Mittelwerten mw_Xfk, mw_Yfk befreit werden:

$$Xf = Xfm - Kxxf * (Xfk - mw\_Xfk) - Kxyf * (Yfk - mw\_Yfk)$$

$$Yf = Yfm - Kyyf * (Yfk - mw\_Yfk) + Kxyf * (Xfk - mw\_Xfk) .$$

Da bei dem in Fig. 3 gezeigten Ausführungsbeispiel zu Diagnosezwecken und/oder zur Normierung des Messergebnisses 23 auch Störsignalanteile mit der zweifachen Modulationsfrequenz 2f herangezogen werden, kann die Erschütterungskompensation in analoger Weise auch bei Auswertung dieser Störsignalanteile anwendet werden:

$$X2f = X2fm - Kxx2f * (X2fk - mw\_X2fk)$$
$$- Kxy2f * (Y2fk - mw\_Y2fk)$$

$$Y2f = Y2fm - Kyy2f * (Y2fk - mw\_Y2fk)$$
$$+ Kxy2f * (X2fk - mw\_X2fk) .$$

Dabei sind X2f die Inphasenkomponente und Y2f die Quadraturkomponente des korrigierten 2f-Signalanteils des Messsignals 14, Kxx2f der Korrelationsfaktor zwischen den Inphasenkomponenten X2fm und X2fk der 2f-Signalanteile des Mess- und Kompensationssignals 14, 20, Kyy2f der Korrelationsfaktor zwischen den Quadraturkomponenten Y2fm und Y2fk der 2f-Signalanteile des Mess- und Kompensationssignals 14, 20 und mw_X2fk und mw_Y2fk die Mittelwerte der Inphasenkomponente X2fk und der Quadraturkomponente Y2fk. Ggf. kann der Korrelationsfaktor Kyy2f kann vereinfacht als gleich groß wie der Korrelationsfaktor Kxx2f angenommen werden, d. h. Kyy2f = Kxx2f.

Zur Ermittlung der Korrelationsfaktoren kann im einfachsten Fall der Infrarot-Gasanalysator 1 außerhalb des Messbetriebs bei abgeschalteter Infrarot-Strahlungsquelle 2 gezielt mit Schwingungen oder Vibrationen angeregt werden. Die Korrelationsfaktoren werden dann als das Verhältnis des bei der Frequenz f demodulierten Messsignals 14 zu dem bei derselben Frequenz f demodulierten Kompensationssignal 20 bestimmt. Im Falle der Zweiphasen-Lock-in-Demodulation können also die Korrelationsfaktoren Kxxf und Kyyf beispielsweise wie folgt bestimmt werden:

$$Xf = Xfm - Kxxf * (Xfk - mw\_Xfk) = 0$$
$$\Rightarrow Kxxf = Xfm / (Xfk - mw\_Xfk)$$

$$Yf = Yfm - Kyyf * (Yfk - mw\_Yfk) = 0$$
$$\Rightarrow Kyyf = Yfm / (Yfk - mw\_Yfk).$$

Wie oben bereits erläutert, muss im einfachsten Fall der Einphasen-Lock-in-Demodulation nur ein einziger Korrelationsfaktor, Kxxf, bestimmt werden. Der Korrelationsfaktor Kxxf und ggf. die analog ermittelten weiteren Korrelationsfaktoren Kyyf und Kxyf werden in der Auswerteeinrichtung 22, z. B. in der Recheneinheit 42, abgespeichert, um das im Messbetrieb des Infrarot-Gasanalysators 1 erhaltene demodulierte Messsignal 14 zu korrigieren.

Der auf die beschriebene Weise bei äußerer Schwingungs- oder Vibrationsanregung des Gasanalysators 1 ermittelte mindestens eine Korrelationsfaktor eignet sich für die Kompensation von Schwingungen bzw. Vibrationen, welche bei der Ermittlung des Korrelationsfaktors und im nachfolgenden Messbetrieb gleich sind oder als weitgehend gleich angenommen werden können. Dies kann z. B. bei der Anwendung in Turbinenhäusern der Fall sein.

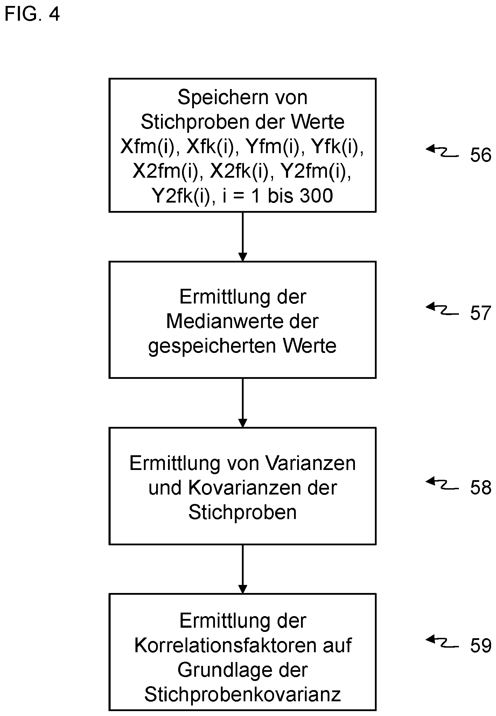

Wie im Folgenden unter Bezugnahme auf das in Fig. 4 gezeigte Ablaufdiagramm erläutert wird, kann der mindestens eine Korrelationsfaktor Kxxf bzw. können die Korrelationsfaktoren Kxxf, Kyyf, Kxyf, Kxx2f, Kyy2f und Kxy2f (ggf. auch noch Kyxf und Kyx2f) für die übrigen Fälle unbekannter oder nicht vorhersagbarer Erschütterungen und Schwingungen auch adaptiv im laufenden Messbetrieb durch statistische Auswertung des demodulierten Messsignals 14 und des demodulierten Kompensationssignals 20 ermittelt werden. Die statistische Auswertung kann dabei für jeden oder jeden n-ten Messzyklus, in dem ein Messergebnis 23 ermittelt wird, jeweils auf Grundlage einer Stichprobe von zuletzt erhaltenen Werten des demodulierten Messsignals 14 und des demodulierten Kompensationssignals 20 erfolgen. Die Größe der Stichprobe, d. h. die Anzahl der in ihr enthaltenen Werte kann vorgegeben werden.

Im Folgenden sei angenommen, dass, wie oben bereits beispielhaft erwähnt, die Inphasenkomponente Xf und die Quadraturkomponente Yf des korrigierten 1f-Signalanteils des Messsignals 14 wie folgt ermittelt werden:

$$Xf = Xfm - Kxxf * (Xfk - mw\_Xfk) - Kxyf * (Yfk - mw\_Yfk)$$

$$Yf = Yfm - Kyyf * (Yfk - mw\_Yfk) + Kxyf * (Xfk - mw\_Xfk).$$

Um die Korrelationsfaktoren Kxxf, Kxyf und Kyyf durch statistische Auswertung des demodulierten Messsignals 14 und des demodulierten Kompensationssignals 20 ermitteln zu können, werden in einem ersten Schritt 56 die nacheinander erhaltenen Werte von Xfm, Xfk, Yfm und Yfk über ein vorgegebenes Intervall von z. B. 60 s alle 200 ms (Zykluszeit der Messwertverarbeitung) in Pufferspeichern 54 gespeichert, wobei eine Gewichtung beispielsweise mittels Hamming-Fenster erfolgen kann. Die Stichprobe für die statistische Auswertung 4 * 300 Werte umfasst somit: Xfm(i), Xfk(i), Yfm(i) und Yfk(i), i = 1 bis 300. Wie oben bereits erwähnt, kann vereinfachend Kyyf = Kxxf angenommen werden, so dass in diesem Fall die Werte für Yfm nicht benötigt werden.

Entsprechendes gilt, wenn die Inphasenkomponente X2f und die Quadraturkomponente Y2f des korrigierten 2f-Signalanteils des Messsignals 14 wie folgt ermittelt werden:

$$X2f = X2fm - Kxx2f * (X2fk - mw\_X2fk)$$
$$- Kxy2f * (Y2fk - mw\_Y2fk)$$

$$Y2f = Y2fm - Kyy2f * (Y2fk - mw\_Y2fk)$$
$$+ Kxy2f * (X2fk - mw\_X2fk) .$$

Um die Korrelationsfaktoren Kxxf2, Kxy2f und Kyy2f ermitteln zu können, werden die nacheinander erhaltenen Werte von X2fm, X2fk, Y2fm und Y2fk alle 200 ms während des Intervalls von 60 s in Pufferspeichern 55 gespeichert, so dass auch hier die Stichprobe 4 * 300 Werte umfasst: X2fm(i), X2fk(i), Y2fm(i) und Y2fk(i), i = 1 bis 300.

In einen nächsten Schritt 57 werden Mittelwerte, oder hier Medianwerte md wegen ihrer geringeren Empfindlichkeit gegenüber Ausreißern, der in den Pufferspeichern 54, 55 enthaltenen Werte ermittelt:

md_Xfm = Median [Xfm(i)],
md_Xfk = Median [Xfk(i)),
md_Yfm = Median [Yfm(i)],
md_Yfk = Median [Yfk(i)],
md_X2fm = Median [X2fm(i)],
md_X2fk = Median [X2fk(i)],
md_Y2fm = Median [Y2fm(i)],
md_Y2fk = Median [Y2fk(i)].

Die Mittelwertfreiheit für die statistische Auswertung kann alternativ z. B. auch durch Ableitung der Signale bzw. Bildung der Differenzenquotienten der Werte erreicht werden.

Anschließend, in Schritt 58, werden die folgende Varianzen und Kovarianzen ermittelt:

$$SS_{Xfk,Xfm} = Sum \{(Xfk[i] - md\_Xfk) * (Xfm[i] - md\_Xfm)\} ,$$

$$SS_{Xfk,Xfk} = Sum \{(Xfk[i] - md\_Xfk) * (Xfk[i] - md\_Xfk)\} ,$$

$$SS_{Yfk,Yfm} = Sum \{(Yfk[i] - md\_Yfk) * (Yfm[i] - md\_Yfm)\} ,$$

$$SS_{Yfk,Xfm} = Sum \{(Yfk[i] - md\_Yfk) * (Xfm[i] - md\_Xfm)\} ,$$

$$SS_{Yfk,Yfk} = Sum \{(Yfk[i] - md\_Yfk) * (Yfk[i] - md\_Yfk)\} ,$$

$$SS_{X2fk,X2fm} = Sum \{(X2fk[i] - md\_X2fk) * (X2fm[i] - md\_X2fm)\} ,$$

$$SS_{X2fk,X2fk} = Sum \{(X2fk[i] - md\_X2fk) * (X2fk[i] - md\_X2fk)\} ,$$

$$SS_{Y2fk,Y2fm} = Sum \{(Y2fk[i] - md\_Y2fk) * (Y2fm[i] - md\_Y2fm)\} ,$$

$$SS_{Y2fk,X2fm} = Sum \{(Y2fk[i] - md\_Y2fk) * (X2fm[i] - md\_X2fm)\} ,$$

$$SS_{Y2fk,Y2fk} = Sum \{(Y2fk[i] - md\_Y2fk) * (Y2fk[i] - md\_Y2fk)\} .$$

Schließlich werden in Schritt 59 die Korrelationsfaktoren in Form von Bestimmtheitsmaßen ($R^2$) berechnet:

$$Kxxf = SS_{Xfk,Xfm} / SS_{Xfk,Xfk} ,$$

$$Kxyf \ = \ SS_{Yfk,Xfm} \ / \ SS_{Yfk,Yfk} \ ,$$

$$Kyyf \ = \ SS_{Yfk,Yfm} \ / \ SS_{Yfk,Yfk} \ ,$$

$$Kxx2f \ = \ SS_{X2fk,X2fm} \ / \ SS_{X2fk,X2fk} \ ,$$

$$Kxy2f \ = \ SS_{Y2fk,X2fm} \ / \ SS_{Y2fk,Y2fk} \ ,$$

$$Kyy2f \ = \ SS_{Y2fk,Y2fm} \ / \ SS_{Y2fk,Y2fk} \ .$$

**Patentansprüche**

1. Nichtdispersiver Infrarot-Gasanalysator (1)

   - mit einem optopneumatischen Detektorsystem (10; 10'), das zur Detektion einer modulierten und ein Messgas (7) durchstrahlenden Infrarot-Strahlung (3) gasgefüllte und über eine Leitung (13) mit einem darin angeordneten druck- oder strömungsempfindlichen Sensor (15) verbundene Detektorkammern (11, 12; 24, 25, 26, 27) aufweist und ein Messsignal (14) erzeugt,
   - mit einem parallel und benachbart zu dem Detektorsystem (10; 10') angeordneten, weitgehend baugleichen und gleich ausgerichteten, aber gegenüber der Infrarot-Strahlung (3) unempfindlichen gasgefüllten Kompensationssystem (16, 16'), das einen weiteren druck- oder strömungsempfindlichen Sensor (21) enthält und ein zur Kompensation pneumatischer Störeffekte dienendes Kompensationssignal (29) erzeugt, und
   - mit einer Auswerteeinrichtung (22), die ein Messergebnis (23) aus der Differenz zwischen dem Messsignal (14) und dem Kompensationssignal (20) erzeugt,
   **dadurch gekennzeichnet, dass** die Auswerteeinrichtung (22)
   - eine Lock-in-Demodulationseinrichtung (38) enthält, die das Messsignal (14) und das Kompensationssignal (20) bei der Modulationsfrequenz (f) der Infrarot-Strahlung (3) demoduliert, und
   - dazu ausgebildet ist, einen von pneumatischen Störeffekten freien Nutzsignalanteil (Xf) des Messsignals (14) als Differenz zwischen dem demodulierten Messsignal (14) und dem mit mindestens einem Korrelationsfaktor (Kxxf, Kyyf) multiplizierten demodulierten Kompensationssignal (20) zu erzeugen und den Nutzsignalanteil (Xf) zu dem Messergebnis (23) auszuwerten.

2. Nichtdispersiver Infrarot-Gasanalysator (1) nach Anspruch 1, **dadurch gekennzeichnet, dass** die Auswerteeinrichtung (22) dazu ausgebildet ist, das demodulierte Kompensationssignal (20) vor seiner Multiplikation mit dem Korrelationsfaktor (Kxxf) von seinem Mittelwert (mw_Xfk) zu befreien.

3. Nichtdispersiver Infrarot-Gasanalysator (1) nach Anspruch 1 oder 2, **dadurch gekennzeichnet, dass** die Lock-in-Demodulationseinrichtung (38) als Zweiphasen-Lock-in-Demodulationseinrichtung ausgebildet ist, welche eine Inphasenkomponente (Xfm) und eine Quadraturkomponente (Yfm) des demodulierten Messsignals (14) sowie eine Inphasenkomponente (Xfk) und eine Quadraturkomponente (Yfk) des demodulierten Kompensationssignals (20) erzeugt, und
   **dass** die Auswerteeinrichtung (22) dazu ausgebildet ist, eine Inphasenkomponente (Xf) des Nutzsignalanteils des Messsignals (14) als Differenz zwischen der Inphasenkomponente (Xfm) des demodulierten Messsignals (14) und der mit einem ersten Korrelationsfaktor (Kxxf) multiplizierten Inphasenkomponente (Xfk) des demodulierten Kompensationssignals (20) sowie eine Quadraturkomponente (Yf) des Nutzsignalanteils als Differenz (Yf) zwischen der Quadraturkomponente (Yfm) des demodulierten Messsignals (14) und der mit einem zweiten Korrelationsfaktor (Kyyf) multiplizierten Quadraturkomponente (Yfk) des demodulierten Kompensationssignals (20) zu erzeugen.

4. Nichtdispersiver Infrarot-Gasanalysator (1) nach Anspruch 3, **dadurch gekennzeichnet, dass** die Auswerteeinrichtung (22) ferner dazu ausgebildet ist, von der Inphasenkomponente (Xf) des Nutzsignalanteils des Messsignals (14) die mit einem dritten Korrelationsfaktor (Kxyf) multiplizierte Quadraturkomponente (Yfk) des demodulierten Kompensationssignals (20) zu subtrahieren und zu der Quadraturkomponente (Yf) des Nutzsignalanteils die mit einem vierten Korrelationsfaktor (Kyxf) multiplizierte Inphasenkomponente (Xfk) des demodulierten Kompensationssignals (20) zu addieren.

5. Nichtdispersiver Infrarot-Gasanalysator (1) nach Anspruch 3 oder 4, **dadurch gekennzeichnet, dass** die Auswerteeinrichtung (22) weiterhin dazu ausgebildet ist, die Inphasenkomponente (Xfk) und Quadraturkomponente (Yfk) des demodulierten Kompensationssignals (20) vor ihrer Multiplikation mit dem jeweiligen Korrelationsfaktor (Kxxf, Kyyf, Kxyf, Kyxf) von ihren jeweiligen Mittelwerten (mw_Xfk, mw_Yfk) zu befreien.

6. Nichtdispersiver Infrarot-Gasanalysator (1) nach Anspruch 1, **dadurch gekennzeichnet, dass** bei Ausbildung des Gasanalysators (1) in Zweistrahl-Ausführung mit einer das Messgas (7) und parallel dazu ein Vergleichsgas abwechselnd durchstrahlenden Infrarot-Strahlung (3)
die Lock-in-Demodulationseinrichtung (38) weiterhin dazu ausgebildet ist, das Messsignal (14) und das Kompensationssignal (20) bei der zweifachen Modulationsfrequenz (2f) der Infrarot-Strahlung (3) zu demodulieren, und die Auswerteeinrichtung (22) dazu ausgebildet ist, einen auf der Summe der Absorptionen der Infrarot-Strahlung (3) in dem Messgas (7) und dem Vergleichsgas beruhenden und von pneumatischen Störeffekten freien Störsignalanteil (X2f) des Messsignals (14) als Differenz zwischen dem bei der zweifachen Modulationsfrequenz (2f) demodulierten Messsignal (14) und dem bei der zweifachen Modulationsfrequenz (2f) demodulierten und mit mindestens einem weiteren Korrelationsfaktor (Kxx2f) multiplizierten Kompensationssignal (20) zu erzeugen und den Störsignalanteil (X2f) zu Diagnosezwecken und/oder zur Normierung des Messergebnisses (23) zu verwenden.

7. Nichtdispersiver Infrarot-Gasanalysator (1) nach Anspruch 6 in Verbindung mit Anspruch 2, **dadurch gekennzeichnet, dass** die Auswerteeinrichtung (22) dazu ausgebildet ist, das bei der zweifachen Modulationsfrequenz (2f) demodulierte Kompensationssignal (20) vor seiner Multiplikation mit dem weiteren Korrelationsfaktor (Kxx2f) von seinem Mittelwert (mw_X2fk) zu befreien.

8. Nichtdispersiver Infrarot-Gasanalysator (1) nach Anspruch 6 in Verbindung mit Anspruch 3, **dadurch gekennzeichnet, dass** die Zweiphasen-Lock-in-Demodulationseinrichtung (38) weiterhin eine Inphasenkomponente (X2fm) und eine Quadraturkomponente (Y2fm) des bei der zweifachen Modulationsfrequenz (2f) demodulierten Messsignals (14) sowie eine Inphasenkomponente (X2fk) und eine Quadraturkomponente (Y2fk) des bei der zweifachen Modulationsfrequenz (2f) demodulierten Kompensationssignals (20) erzeugt, und
dass die Auswerteeinrichtung (22) weiterhin dazu ausgebildet ist, eine Inphasenkomponente (X2f) des Störsignalanteils des Messsignals (14) als Differenz zwischen der Inphasenkomponente (X2fm) des bei der zweifachen Modulationsfrequenz (2f) demodulierten Messsignals (14) und der mit einem ersten weiteren Korrelationsfaktor (Kxx2f) multiplizierten Inphasenkomponente (X2fk) des bei der zweifachen Modulationsfrequenz (2f) demodulierten Kompensationssignals (20) sowie eine Quadraturkomponente (Y2f) des Störsignalanteils als Differenz zwischen der Quadraturkomponente (Y2fm) des bei der zweifachen Modulationsfrequenz (2f) demodulierten Messsignals (14) und der mit einem zweiten weiteren Korrelationsfaktor (Kyy2f) multiplizierten Quadraturkomponente (Y2fk) des bei der zweifachen Modulationsfrequenz (2f) demodulierten Kompensationssignals (20) zu erzeugen.

9. Nichtdispersiver Infrarot-Gasanalysator (1) nach Anspruch 8 in Verbindung mit Anspruch 4, **dadurch gekennzeichnet, dass** die Auswerteeinrichtung (22) ferner dazu ausgebildet ist, von der Inphasenkomponente (X2f) des Störsignalanteils des Messsignals (14) die mit einem dritten weiteren Korrelationsfaktor (Kxy2f) multiplizierte Quadraturkomponente (Y2fk) des bei der zweifachen Modulationsfrequenz (2f) demodulierten Kompensationssignals (20) zu subtrahieren und zu der Quadraturkomponente (Y2f) des Störsignalanteils die mit einem vierten weiteren Korrelationsfaktor (Kyx2f) multiplizierte Inphasenkomponente (X2fk) des bei der zweifachen Modulationsfrequenz (2f) demodulierten Kompensationssignals (20) zu addieren.

10. Nichtdispersiver Infrarot-Gasanalysator (1) nach Anspruch 8 oder 9 in Verbindung mit Anspruch 5, **dadurch gekennzeichnet, dass** die Auswerteeinrichtung (22) weiterhin dazu ausgebildet ist, die Inphasenkomponente (X2fk) und Quadraturkomponente (Y2fk) des bei der zweifachen Modulationsfrequenz (2f) demodulierten Kompensationssignals (20) vor ihrer Multiplikation mit dem jeweiligen weiteren Korrelationsfaktor (Kxx2f, Kyy2f, Kxy2f, Kyx2f) von ihren jeweiligen Mittelwerten (mw_X2fk, mw_Y2fk) zu befreien.

11. Nichtdispersiver Infrarot-Gasanalysator (1) nach einem der vorangehenden Ansprüche, **dadurch gekennzeichnet, dass** die verwendeten Korrelationsfaktoren (Kxxf, Kyyf, Kxyf, Kyxf, Kxx2f, Kyy2f, Kxy2f, Kyx2f) als einmalig außerhalb des Messbetriebs des Infrarot-Gasanalysators (1) bei gezielter Vibrationsanregung des Infrarot-Gasanalysators (1) ermittelter Wert in der Auswerteeinrichtung (22) abgespeichert ist.

**12.** Nichtdispersiver Infrarot-Gasanalysator (1) nach einem der Ansprüche 1 bis 10, **dadurch gekennzeichnet, dass** die Auswerteeinrichtung (22) dazu ausgebildet ist, die verwendeten Korrelationsfaktoren (Kxxf, Kyyf, Kxyf, Kyxf, Kxx2f, Kyy2f, Kxy2f, Kyx2f) während des Messbetriebs des Gasanalysators (1) durch statistische Auswertung des demodulierten Messsignals (14) und des demodulierten Kompensationssignals (20) zu ermitteln.

**13.** Nichtdispersiver Infrarot-Gasanalysator (1) nach Anspruch 12, **dadurch gekennzeichnet, dass** die Auswerteeinrichtung (22) dazu ausgebildet ist, die Korrelationsfaktoren (Kxxf, Kyyf, Kxyf, Kyxf, Kxx2f, Kyy2f, Kxy2f, Kyx2f) auf Grundlage einer Stichprobenkovarianz des demodulierten Messsignals (14) und des demodulierten Kompensationssignal (20) zu ermitteln.

**14.** Verfahren zur Gasanalyse unter Verwendung eines nichtdispersiven Infrarot-Gasanalysegeräts nach einem der vorangehenden Ansprüche.

FIG. 1

FIG. 2

FIG. 3

FIG. 4

```
┌─────────────────────────────┐
│      Speichern von          │
│   Stichproben der Werte     │
│  Xfm(i), Xfk(i), Yfm(i), Yfk(i),│   ←⁓ 56
│   X2fm(i), X2fk(i), Y2fm(i), │
│    Y2fk(i), i = 1 bis 300   │
└─────────────────────────────┘
              │
              ▼
┌─────────────────────────────┐
│      Ermittlung der         │
│     Medianwerte der         │   ←⁓ 57
│    gespeicherten Werte      │
└─────────────────────────────┘
              │
              ▼
┌─────────────────────────────┐
│  Ermittlung von Varianzen   │
│   und Kovarianzen der       │   ←⁓ 58
│      Stichproben            │
└─────────────────────────────┘
              │
              ▼
┌─────────────────────────────┐
│      Ermittlung der         │
│   Korrelationsfaktoren auf  │   ←⁓ 59
│      Grundlage der          │
│   Stichprobenkovarianz      │
└─────────────────────────────┘
```

Europäisches
Patentamt

European
Patent Office

Office européen
des brevets

# EUROPÄISCHER RECHERCHENBERICHT

Nummer der Anmeldung

EP 20 15 6957

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 467 435 A (WARNKE DALE F [US] ET AL) 21. August 1984 (1984-08-21) | 1-5,8-14 | INV. G01N21/37 |
| Y | * Spalte 1, Zeilen 6-12 * <br> * col. 5, l. 57 - col. 6, l. 26 * <br> * col. 8, l. 30 - col. 9, l. 63 * <br> * Abbildung 1 * | 6,7 | G01N21/61 |
| Y,D | DE 10 2012 212978 B3 (SIEMENS AG [DE]) 22. August 2013 (2013-08-22) <br> * Absätze [0001], [0009], [0028] * <br> * Abbildung 1 * | 6,7 | |
| A | M. TAVAKOLI ET AL: "An offset-canceling low-noise lock-in architecture for capacitive sensing", <br> IEEE JOURNAL OF SOLID-STATE CIRCUITS, <br> Bd. 38, Nr. 2, <br> 1. Februar 2003 (2003-02-01), Seiten 244-253, XP055711610, <br> USA <br> ISSN: 0018-9200, DOI: 10.1109/JSSC.2002.807173 <br> * Zusammenfassung * <br> * Absatz [0III] * <br> * Abbildung 3 * | 6,7 | |
| A | US 2012/283961 A1 (WITTMANN ANDREAS [CH] ET AL) 8. November 2012 (2012-11-08) <br> * Absätze [0002], [0005] * <br> * Abbildung 1 * | 6,7 | |
| X | JP S52 90984 A (FUJI ELECTRIC CO LTD) 30. Juli 1977 (1977-07-30) <br> * Absatz [0001] * <br> * Abbildungen 5,8 * | 1,14 | |

RECHERCHIERTE SACHGEBIETE (IPC)

G01N

-/--

Der vorliegende Recherchenbericht wurde für alle Patentansprüche erstellt

| Recherchenort | Abschlußdatum der Recherche | Prüfer |
|---|---|---|
| München | 10. Juli 2020 | Brauer, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                                  
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S52 94187 A (FUJI ELECTRIC CO LTD) 8. August 1977 (1977-08-08) * Absatz [0001] * * Abbildungen 1-4 * ----- | 1,14 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 10. Juli 2020 | Brauer, Jan |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
      Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 15 6957

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-07-2020

| Im Recherchenbericht angeführtes Patentdokument | Datum der Veröffentlichung | Mitglied(er) der Patentfamilie | Datum der Veröffentlichung |
|---|---|---|---|
| US 4467435 A | 21-08-1984 | EP 0076571 A1<br>JP H0347451 B2<br>JP S5871440 A<br>US 4467435 A | 13-04-1983<br>19-07-1991<br>28-04-1983<br>21-08-1984 |
| DE 102012212978 B3 | 22-08-2013 | KEINE | |
| US 2012283961 A1 | 08-11-2012 | CN 102768197 A<br>EP 2520925 A1<br>JP 5528497 B2<br>JP 2012233900 A<br>US 2012283961 A1 | 07-11-2012<br>07-11-2012<br>25-06-2014<br>29-11-2012<br>08-11-2012 |
| JP S5290984 A | 30-07-1977 | KEINE | |
| JP S5294187 A | 08-08-1977 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2702978 A1
- DE 102012212978 B3

- EP 2130295 B1
- EP 3276308 A1